# FASCICULE DE BREVET EUROPEEN

(11) **EP 3 309 916 B1**
(45) Date de publication et mention de la délivrance du brevet: **22.06.2022**
(21) Numéro de dépôt: 17306386.8
(22) Date de dépôt: 13.10.2017
(51) Int. Cl.: H02G 3/08, H02G 3/18

(54) **BOITIER D'APPAREILLAGE ÉLECTRIQUE, APPAREIL ÉLECTRIQUE POUR LEDIT BOITIER ET APPAREILLAGE ÉLECTRIQUE COMPRENANT LEDIT BOITIER ET LEDIT APPAREIL ÉLECTRIQUE**
ELEKTRISCHES AUSRÜSTUNGSGEHÄUSE, ELEKTRISCHES GERÄT FÜR EIN SOLCHES GEHÄUSE UND ELEKTRISCHE AUSRÜSTUNG MIT EINEM SOLCHEN GEHÄUSE UND ELEKTRISCHEM GERÄT
ELECTRICAL EQUIPMENT HOUSING, ELECTRICAL APPARATUS FOR SUCH HOUSING AND ELECTRICAL EQUIPMENT COMPRISING SUCH HOUSING AND ELECTRICAL APPLIANCE

(30) Priorité: 14.10.2016 FR 1659956
(43) Date de publication de la demande: 18.04.2018
(73) Titulaire: Berker GmbH & Co. KG, 58579 Schalksmühle (DE)
(72) Inventeur: DUVIVIER, Laurent, 67310 SCHARRACHBERGHEIM (FR); VARIN, Bruno, 67202 WOLFISHEIM (FR)
(74) Mandataire: Cabinet Nuss

(56) Documents cités:
- FR-A1- 2 692 083
- FR-A1- 2 769 759
- US-A- 4 669 804
- US-A- 4 908 733
- US-B1- 6 604 798

## Description

La présente invention concerne le domaine des appareillages électriques.

Les appareillages électriques, et plus particulièrement, les interrupteurs ou prises comprennent généralement un boîtier, préférentiellement étanche, et qui est destiné à être installé en saillie sur un support, tel qu'un mur. De tels appareillages électriques comprennent en outre dans leur boîtier un ou plusieurs sites permettant de recevoir un module de prise et/ou un module d'interrupteur, par exemple. Ces appareillages électriques présentent une orientation prédéfinie en fonction de l'installation finale. Lorsque l'appareil électrique comprend plusieurs sites, il est nécessaire de prévoir pour la même gamme de produit, des appareillages électriques destinés à une installation selon une orientation verticale et des appareillages électriques destinés à une installation selon une orientation horizontale. Cette multiplicité des références complexifie non seulement la fabrication, mais également l'installation.

Le document US 6 604 798 B1 décrit déjà d'une part, un boîtier, et d'autre part, un appareil électrique conformes aux préambules respectivement des revendications 1 et 6. FR2769759 A1, FR2692083 A1, US4669804, et US4908733 divulguent d'autres boîtiers électriques avec des structures pour le montage d'un appareil électrique à l'intérieur.

La présente invention a pour but de proposer une solution simple à mettre en œuvre par l'installateur et permettant de surmonter les limitations de l'état de la technique indiquées ci-dessus.

A cet effet, l'invention a pour objet un boîtier d'appareillage électrique selon la revendication 1.

La présente invention concerne également un appareil électrique apte et destiné à être disposé à l'intérieur dudit au moins un site ou premier site d'un boîtier tel que décrit précédemment, selon la revendication 6.

La présente invention concerne également un appareillage électrique caractérisé en ce qu'il comprend le boîtier tel que décrit précédemment et au moins un appareil électrique tel que décrit précédemment.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
la figure 1 est une vue en perspective de l'appareillage électrique selon l'invention selon une orientation horizontale dans une première variante de réalisation,
la figure 2 est une vue en perspective de l'appareillage électrique selon l'invention selon une orientation verticale dans une deuxième variante de réalisation,
la figure 3 est une vue en perspective de l'appareillage électrique de la figure 2 dans lequel le couvercle de la prise et le bouton de l'interrupteur ont été retirés,
la figure 4 est une vue de dessus du boîtier selon l'invention dans une première variante de réalisation du boîtier,
la figure 5 est une vue en perspective du boîtier de la figure 4,
la figure 6 est une vue de dessous du boîtier de la figure 4,
la figure 7 est une vue de dessus de l'appareil électrique formé d'un interrupteur selon l'invention,
la figure 8 est une vue en perspective de l'appareil électrique de la figure 7,
la figure 9 est une vue en perspective de l'appareil électrique formé d'une prise selon l'invention,
la figure 10 est vue en perspective de l'appareillage électrique selon la deuxième variante montrant l'assemblage du boîtier selon l'invention représenté à la figure 4 et des appareils électriques selon l'invention représentés aux figures 7 à 9,
la figure 11 est une vue en perspective de l'appareillage électrique selon l'invention dans une troisième variante de réalisation,
la figure 12 est une vue en perspective du boîtier selon l'invention dans une deuxième variante de réalisation du boîtier,
la figure 13 est une vue en perspective de l'appareillage électrique selon la troisième variante montrant l'assemblage du boîtier selon l'invention représenté à la figure 11 et de l'appareil électrique selon l'invention, et,
la figure 14 est une vue de côté de l'appareillage électrique représenté à la figure 13,
la figure 15 est une vue en perspective d'un élément d'obturation du boîtier selon l'invention.

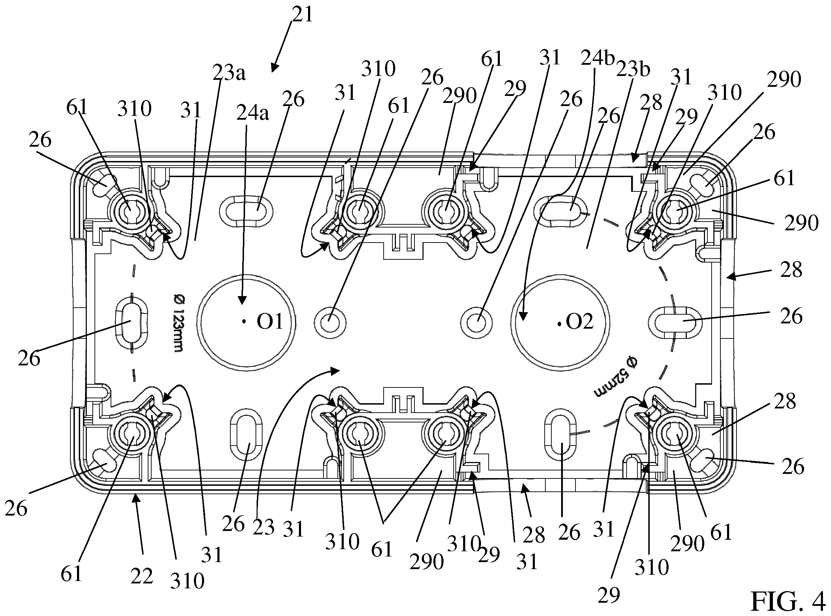

Comme le représentent les figures 4, 5 et 12, le boîtier 2 d'appareillage électrique 1 comporte :
une embase 21 comprenant une paroi latérale 22 et un fond 23, ledit fond 23 étant bordé par ladite paroi latérale 22,
ladite embase 21 comprenant au moins un site 24a ou un premier site 24a apte et destiné à recevoir un seul appareil électrique 3,
ledit au moins un site 24a ou un premier site 24a comprenant au moins un ensemble ou un premier ensemble de moyens d'emboîtement 31 femelles ou mâles qui s'étendent du fond 23 ou d'au moins une première partie 23a du fond 23 pour recevoir des moyens d'emboîtement 32 mâles ou femelles complémentaires de l'appareil électrique 3.

Conformément à l'invention, les moyens d'emboîtement 31 dudit au moins un site 24a ou un premier site 24a sont symétriques par rotation d'un angle égal à 90 degrés et 180 degrés, selon un centre de symétrie O1 ou un premier centre de symétrie O1 respectivement du fond 23 ou de ladite au moins une première partie du fond 23a.

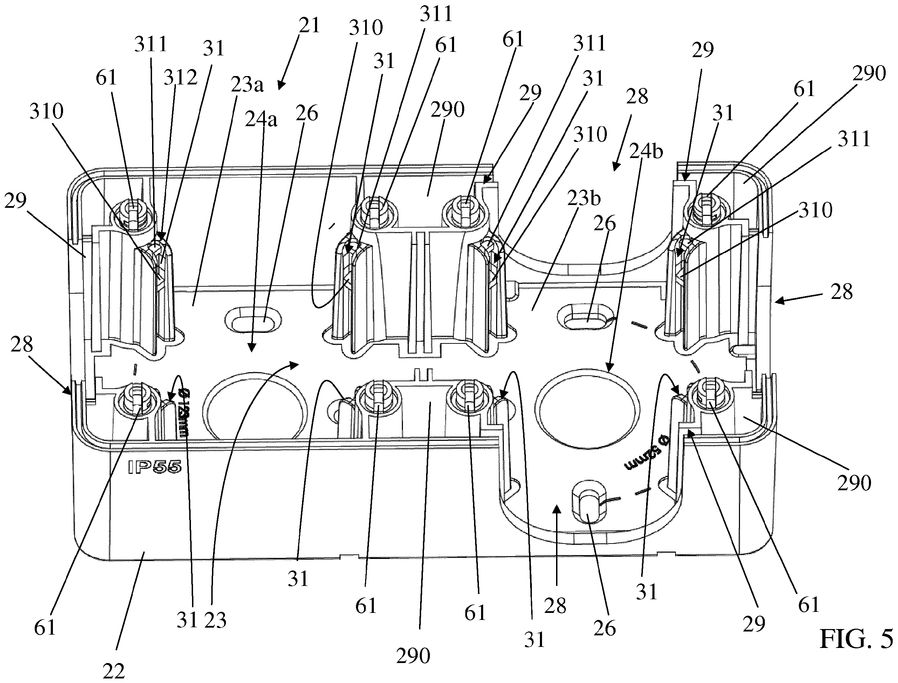

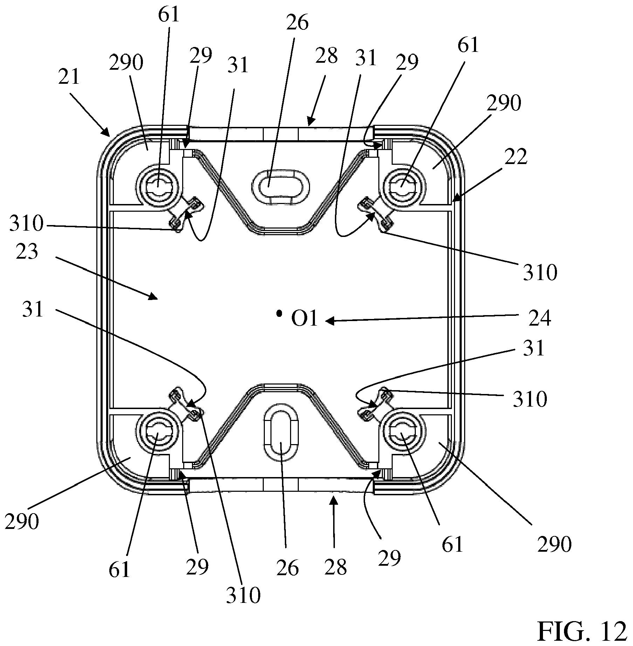

Avantageusement, un tel boîtier 2 permet de recevoir un seul appareil électrique 3 par site 24a et qui est orientable dans le boîtier 2 selon quatre orientations en effectuant des rotations de 90 degrés ou selon deux orientations en effectuant des rotations 180 degrés par rapport au centre de symétrie O1 du fond 23 (figure 12) ou de la première partie de fond 23a (figures 4 et 5). L'appareil électrique 3 peut ainsi être amovible et orientable du boîtier 2. Il en résulte que la possibilité d'orienter l'appareil électrique 3 peut être dissociée de l'orientation du boîtier 2.

Selon une première variante de réalisation du boîtier 2, l'embase 21 peut comprendre ledit premier site 24a et au moins un deuxième site 24b, le premier site 24a peut comprendre le premier ensemble de moyens d'emboîtement 31 femelles ou mâles, le deuxième site 24b peut comprendre un deuxième ensemble de moyens d'emboîtement 31 femelles ou mâles, le fond 23 peut comprendre ladite première partie de fond 23a et une deuxième partie de fond 23b comprenant un deuxième centre de symétrie O2 et les moyens d'emboîtement 31 du premier site 24a et du seconde site 24b sont symétriques par rotation d'un angle égal à 90 degrés et 180 degrés respectivement selon le premier centre de symétrie O1 et le deuxième centre de symétrie O2.

Dans cette première variante de réalisation, l'embase 21 peut comprendre strictement deux sites 24a, 24b, comme le représentent les figures 4 et 5 ou plus de deux sites 24a, 24b.

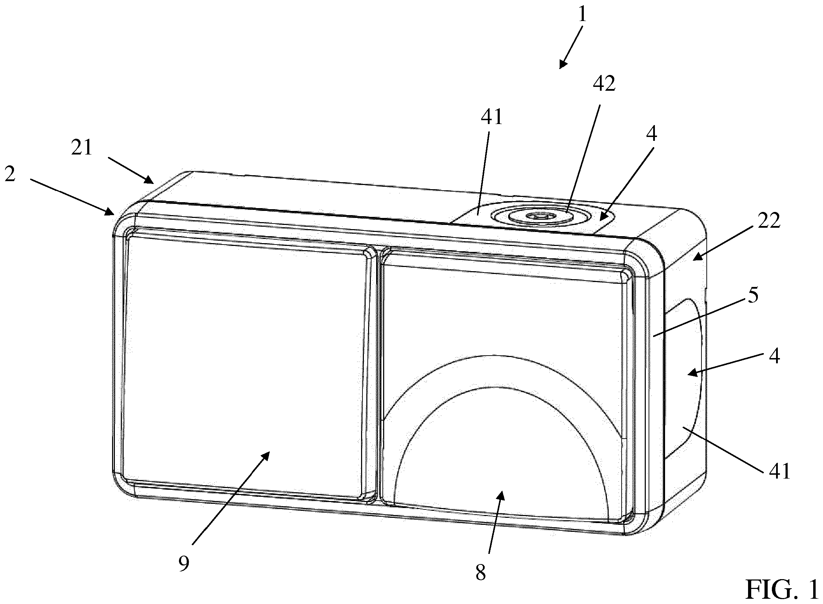

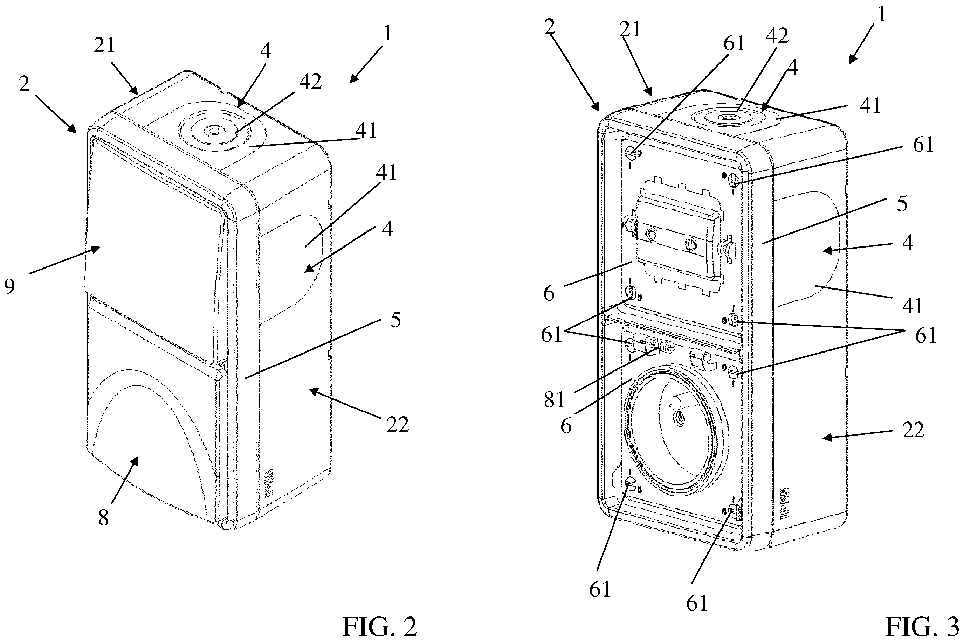

Avantageusement, selon cette variante de réalisation, le boîtier 2 peut être orienté aussi bien selon une orientation horizontale (figure 1) ou une orientation verticale (figures 2 et 3), puisque les moyens d'emboîtement 31 de l'embase 21 permettent de recevoir un appareil électrique 3 selon quatre orientations différentes indépendamment de l'orientation du boîtier 2. On entend par orientation horizontale une orientation de l'axe longitudinal du boîtier 2 sensiblement parallèle au plan du sol pris pour référence et par orientation verticale, une orientation de l'axe longitudinal du boîtier 2 sensiblement perpendiculaire au plan du sol.

Selon une deuxième variante de réalisation du boîtier 2, l'embase 21 peut comprendre un unique site 24a et le site 24a peut comprendre un unique ensemble de moyens d'emboîtement 31 femelles ou mâles, et le fond 23 peut comprendre le centre de symétrie O1, comme le représente la figure 12.

Les moyens d'emboîtement sont femelles et comprennent au moins une rainure 31 saillante de ladite au moins une partie du fond 23a, 23b (figures 4 et 5) ou du fond 23 (figure 12), s'étendant selon une direction sensiblement perpendiculaire au fond 23.

De telles rainures 31 sont prévues pour coopérer par emboîtement avec les moyens mâles 32 de formes complémentaires de l'appareil électrique 3. Une telle coopération par emboîtement permet une fixation réversible de l'appareil électrique 3 avec le boîtier 2.

La rainure 31 comprend une butée d'arrêt 310 disposée à une distance déterminée du fond 23, comme l'illustrent les figures 4, 5 et 12.

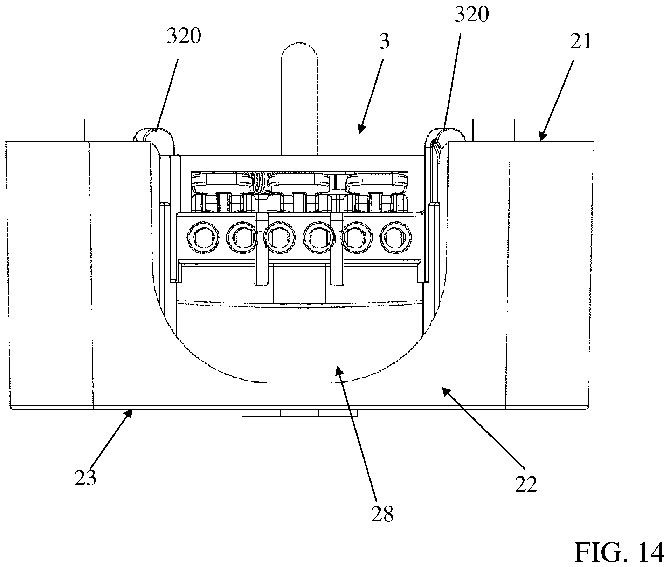

Une telle butée d'arrêt 310 est destinée à venir en appui contre une extrémité inférieure de la languette saillante 321 de l'appareil électrique 3. Il en résulte que l'appareil électrique 3 peut être maintenu à distance du fond 23 de l'embase 21, comme visible à la figure 14.

L' ensemble de moyens d'emboîtement comprend quatre rainures 31 équidistantes dudit centre de symétrie O1, O2.

Deux rainures 31 diamétralement opposées peuvent être disposées en vis-à-vis et les moyens d'emboîtement 31 peuvent être situés à distance de la paroi latérale 22.

De préférence, la rainure 31 peut comprendre des moyens de verrouillage 311 situés à distance de la butée d'arrêt 310.

Avantageusement, les moyens de verrouillage 311 sont prévus pour coopérer avec les moyens de verrouillage 322 de forme complémentaire, des moyens d'emboîtement 32 de l'appareil électrique 3. Ils garantissent que l'appareil électrique 3 d'un premier site 24a et/ou d'un deuxième site 24b soit fixé et verrouillé à l'embase 21 du boîtier 2.

Plus particulièrement, dans la première variante illustrée à la figure 5, les moyens de verrouillage peuvent être une butée 311 saillante de la rainure 31 et qui est disposée à l'extrémité supérieure 312 de la rainure 31.

De manière alternative, les moyens d'emboîtement peuvent être mâles et être saillants de ladite au moins une partie du fond 23a, 23b ou du fond 23 et s'étendre selon une direction sensiblement perpendiculaire au fond 23.

Le boîtier 2 est préférentiellement destiné à être monté en saillie sur un support d'appui (non représenté), par exemple un mur.

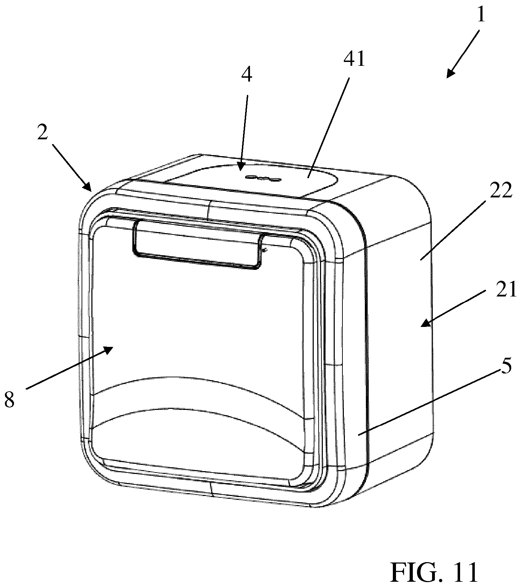

La paroi latérale 22 de l'embase 21 peut délimiter au moins en partie une ouverture de l'embase 21 surmontée d'un cadre 5 muni d'une ouverture (figure 11) ou d'une pluralité d'ouvertures (figures 1 à 3).

Chaque ouverture du cadre 5 peut être fermée par un enjoliveur 6 qui peut être fixé à l'embase 21 par des moyens de verrouillage, préférentiellement des clés quart de tour 61, comme l'illustre notamment la figure 3.

Préférentiellement, les clés quart de tour sont saillantes du fond 23 de l'embase 21 (figures 4, 5, 12, et 13).

L'enjoliveur 6 peut être recouvert d'un couvercle 8, notamment lorsque l'appareil électrique 3 est un module de prise (figures 1, 2 et 11).

Ce couvercle 8 peut être monté pivotant sur ce dernier et rappelé au moyen d'un ressort 81.

L'enjoliveur 6 peut être recouvert d'un poussoir 9 notamment lorsque l'appareil électrique 3 est un module d'interrupteur (figures 1 et 2).

Le fond 23 de l'embase 21 peut comprendre des moyens de fixation, préférentiellement au moins un orifice 26 traversant, préférentiellement de forme oblongue ou circulaire, aptes et destinés à fixer l'embase 21 par le fond 23 au support d'appui, comme l'illustrent les figures 4, 5, 6, 12, 13.

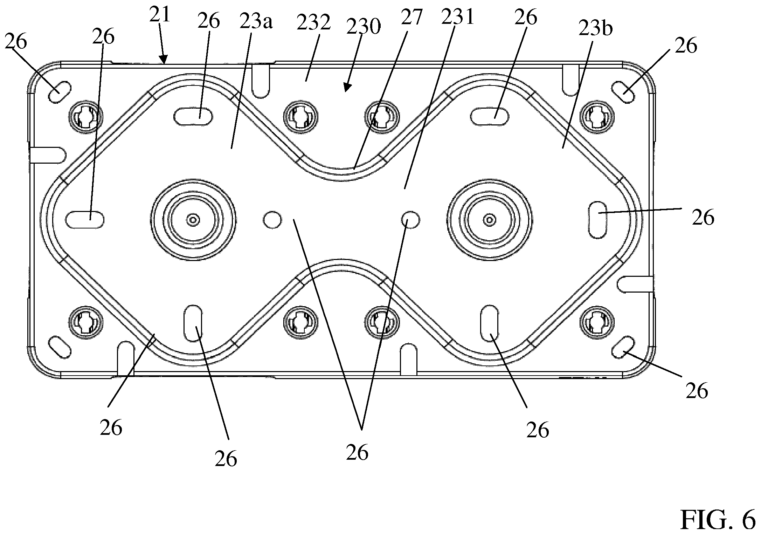

Le fond 23 peut comprendre une face externe 230, apte et destinée à être placée en appui contre la surface d'appui, comportant une première zone 231 et une seconde zone 232, et sur laquelle est disposée un moyen d'étanchéité, préférentiellement un joint 27, comme le montre la figure 6.

Dans ce cas, le joint 27 peut délimiter d'une part, la première zone 231 qui est disposée à l'intérieur du moyen d'étanchéité pour former une partie isolée par rapport à un fluide environnant le boîtier 2 à l'état monté sur le support d'appui et, d'autre part, la seconde zone 232 peut comprendre au moins en partie les moyens de fixation 26.

La première zone 231 peut également comprendre au moins en partie les moyens de fixation 26.

La paroi latérale 22 de l'embase 21 peut comprendre au moins une ouverture latérale 28.

Dans la première variante de réalisation du boîtier 2, l'embase 21 peut comprendre quatre ouvertures latérales 28 (figures 4, 5 et 10).

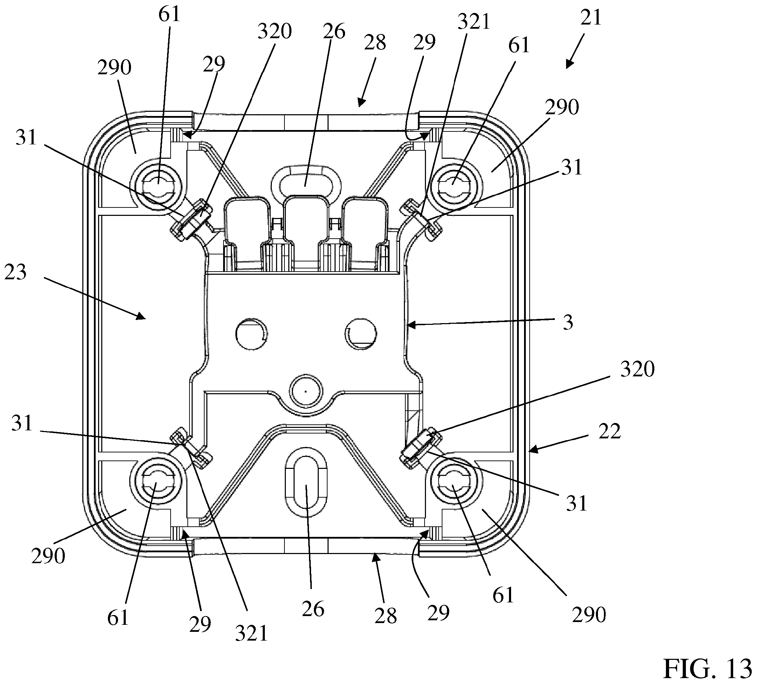

Dans la deuxième variante de réalisation du boîtier 2, l'embase 21 peut comprendre deux ouvertures latérales 28 (figures 12 et 13) et qui peuvent être en vis-à-vis.

Ces ouvertures latérales 28 peuvent être obturées par un élément d'obturation 4 amovible de la paroi latérale 22 de l'embase 21.

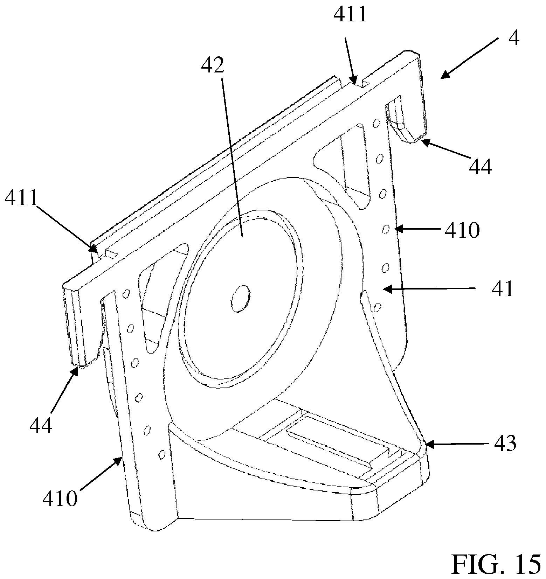

L'élément d'obturation 4 peut comporter au moins une paroi 41 et une base 43 sensiblement perpendiculaire à la paroi 41. La paroi 41 peut comprendre au moins une portion détachable 42 pour créer un passage permettant d'introduire un câble, comme l'illustre la figure 15.

De préférence, l'embase 21 peut comporter des moyens de guidage 29, et l'élément d'obturation 4 peut être mobile en translation par rapport aux moyens de guidage 29 entre une position d'ouverture dans laquelle l'ouverture latérale 28 est ouverte et la position de fermeture dans laquelle l'ouverture latérale 28 est obturée au moins en partie par la paroi 41.

Les moyens de guidage peuvent consister en deux rails 29 s'étendant selon une direction sensiblement perpendiculaire au fond 23 et disposés en vis-à-vis et de part et d'autre de ladite ouverture latérale 28, comme l'illustrent les figures 4, 5, 12 et 13.

La paroi 41 de l'élément d'obturation 4 peut comporter deux bords latéraux opposés 410, de préférence rectilignes et/ou parallèles entre eux, pouvant coulisser selon un mouvement de translation dans les deux rails 29 entre la position d'ouverture et la position de fermeture.

L'élément d'obturation 4 peut comporter des moyens de verrouillage 44, préférentiellement en forme de crochets, qui sont saillants d'une extrémité supérieure 411 des bords latéraux 410 de l'élément d'obturation 4 et s'étendent en direction du fond 23 en position de fermeture.

L'embase 21 peut comporter deux logements 290 disposés chacun à côté d'un des deux rails 29, pour recevoir lesdits moyens de verrouillage 44 en position de fermeture.

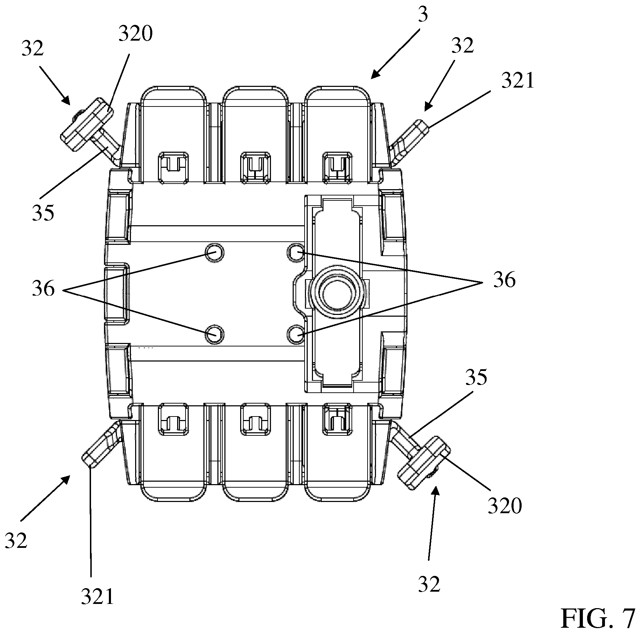

Les figures 7 à 9 montrent un appareil électrique 3 apte et destiné à être disposé à l'intérieur dudit au moins un site 24a ou premier site 24a, 24b d'un boîtier 2 décrit précédemment.

Conformément à l'invention, l'appareil électrique 3 comprend des moyens d'emboîtement 32 mâles pour coopérer par emboîtement avec lesdits moyens d'emboîtement 31 femelles correspondants de l'embase 21 et les moyens d'emboîtement 32 sont symétriques par rotation d'un angle égal à 90 degrés et à 180 degrés selon un centre de symétrie C1 dudit appareil électrique 3.

L' 'appareil électrique 3 peut être installé dans le site ou premier site 24a ou le deuxième site 24b de l'embase 21 du boîtier 2 selon quatre orientations en effectuant des rotations de 90 degrés ou selon deux orientations en effectuant des rotations de 180 degrés par rapport au centre de symétrie O1 du fond 23. L'appareil électrique 3 peut ainsi être amovible et orientable du boîtier 2.

Les moyens d'emboîtement 32 sont mâles.

De manière alternative, les moyens d'emboîtement sont femelles.

Plus particulièrement, les moyens d'emboîtement 32 mâles comprennent au moins deux languettes 321 saillantes de l'appareil électrique 3 et diamétralement opposées aptes et destinées à être emboîtées dans les rainures 31 du boîtier 2, les languettes 321 étant symétriques par rotation d'un angle égal à 180 degrés selon le centre de symétrie C1.

En effet, au minimum deux languettes 321 diamétralement opposées sont requises pour permettre la fixation de l'appareil électrique 3 par emboîtement dans les rainures 31 dans les quatre orientations possibles.

Les moyens d'emboîtement 32 comprennent quatre languettes 321 saillantes de l'appareil électrique 3 aptes et destinées à être emboîtées dans les quatre rainures 31 correspondantes du boîtier 2 et les languettes 321 étant symétriques par rotation d'un angle égal à 90 degrés selon le centre de symétrie C1.

Les languettes 321 peuvent s'étendre le long de la paroi latérale 34 de l'appareil électrique 3 ou la prolonger, dans une direction sensiblement parallèle à un axe passant par le centre de symétrie C1. Comme l'illustrent les figures 7, 8 et 9, l'appareil électrique 3 comportent deux telles languettes saillantes 321 diamétralement opposées.

Les languettes 321 peuvent également être orientées d'un angle permettant leur coopération avec les rainures 31 de l'embase 21.

Au moins un des moyens d'emboîtement 32 mâles est déformable et comprend une partie d'appui 320 apte et destinée à désemboîter lesdits moyens d'emboîtement 32 mâles desdits moyens d'emboîtement 31 femelles de l'embase 21.

Avantageusement, la partie d'appui 320 permet de désengager les languettes 321 de l'appareil électrique des rainures 31. En effet, en appuyant sur la partie d'appui 320, le retrait de la languette 321 est facilité par déformation de celles-ci.

Au moins deux languettes saillantes 321 diamétralement opposées sont déformables et comprennent chacune ladite partie d'appui 320.

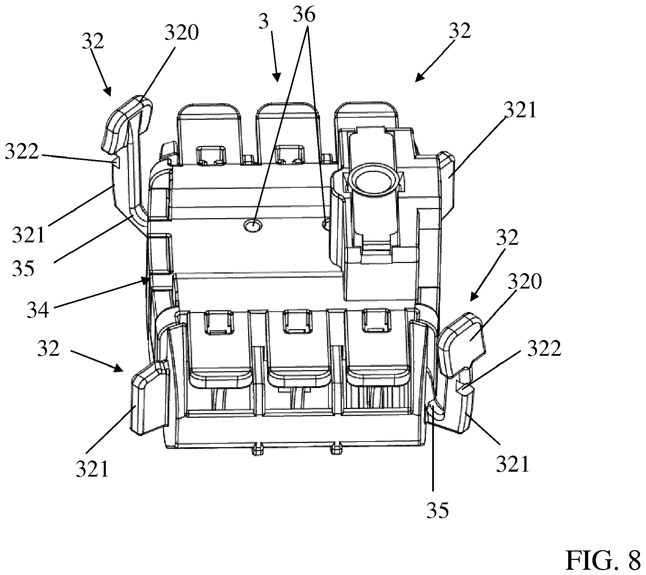

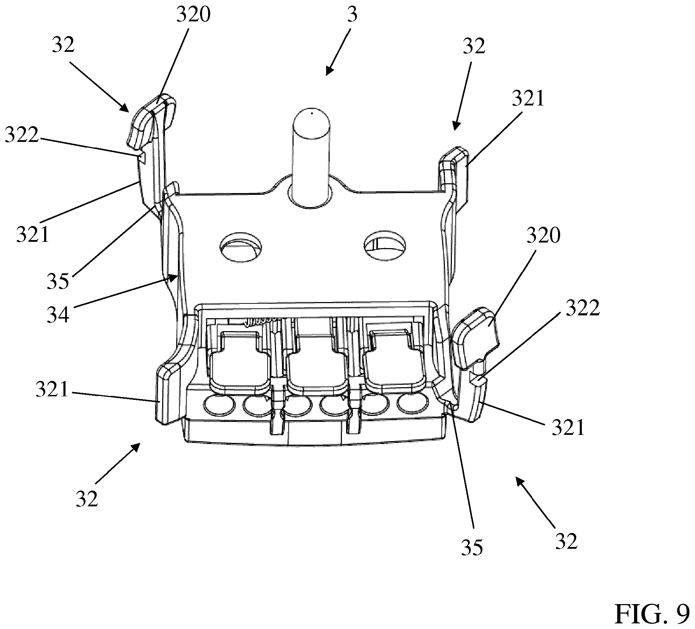

Par exemple et comme cela est visible sur les figures 8 et 9, ces languettes 321 saillantes et déformables peuvent être reliées à la paroi latérale 34 de l'appareil électrique 3 par une portion amincie 35, conférant la déformabilité à ces languettes 321.

Par exemple, la partie d'appui peut consister en une portion 320 élargie par rapport à la languette 321 et s'étendant de l'extrémité supérieure de celle-ci.

L' appareil électrique 3 comprend deux languettes saillantes 321 diamétralement opposées parmi les quatre languettes saillantes 321 et les deux languettes saillantes 321 diamétralement opposées comprennent chacune ladite partie d'appui 320, comme représenté aux figures 7 à 9.

Ces deux languettes saillantes 321 diamétralement opposées comprenant chacune ladite partie d'appui 320 comprennent des moyens de verrouillage 322.

Plus particulièrement, ces moyens de verrouillage peuvent consister en un crochet 322, formé par un retrait au niveau de la languette 321 et qui peut coopérer par emboîtement avec les moyens de verrouillage 311 prévus au niveau des rainures 31.

L'appareil électrique 3 peut consister en un module d'interrupteur (figures 7 et 8) ou en un module de prise (figure 9), bien connu de l'homme du métier.

L'appareil électrique 3 consistant en un module d'interrupteur peut comprendre quatre orifices 36 symétriques par rotation d'un angle de 90 degrés et/ou de 180 degrés selon l'axe de symétrie C1. Ces orifices 36 permettent de recevoir un voyant lumineux (non représenté).

Le voyant lumineux peut être amovible de l'appareil électrique 3 et comprendre à cet effet des moyens d'emboîtement pouvant être inséré dans les orifices 36.

Les moyens d'emboîtement mâles du voyant lumineux peuvent comprendre au moins deux tiges saillantes du voyant lumineux et écartées l'une de l'autre.

Les figures 1, 2, 3 et 11 illustrent un appareillage électrique 1. Conformément à l'invention, l'appareillage électrique 1 comprend le boîtier 2 tel que décrit précédemment et au moins un appareil électrique 3 tel que décrit précédemment.

Le boîtier 2 peut comprendre un site 24a ou au un moins premier site 24a recevant chacun un unique appareil électrique 3 et l'appareil électrique 3 est fixé au site 24a ou audit au moins un premier site 24a par emboîtement des moyens d'emboîtement 31 du site 24a ou dudit au moins premier site 24a et des moyens d'emboîtement 32 de l'appareil électrique 3.

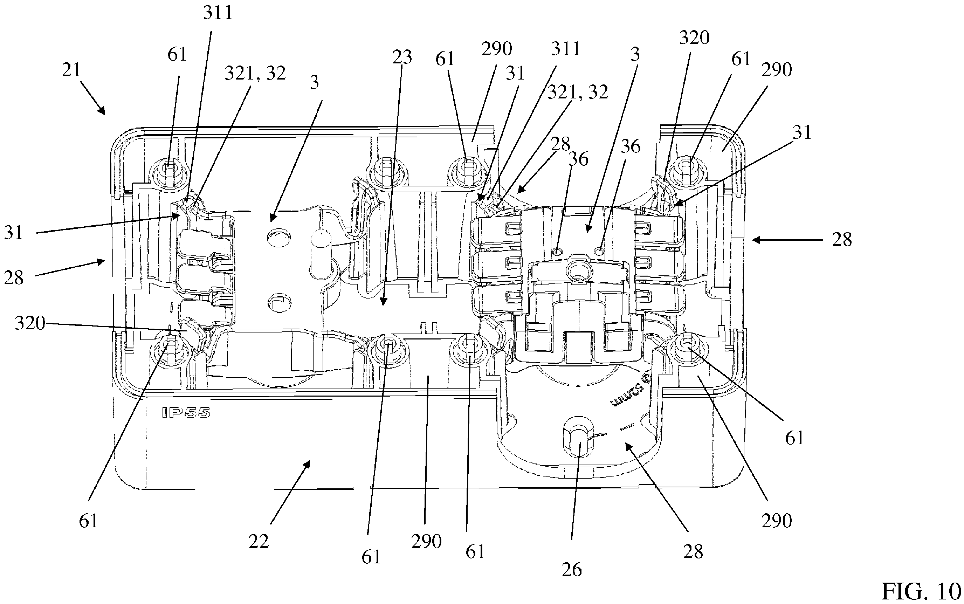

Comme l'illustre la figure 10, selon une première variante, le boîtier 2 comprend un premier site 24a et un deuxième site 24b recevant chacun un unique appareil électrique 3.

Dans cette figure 10, les deux appareils électriques 3 sont orientés pour une orientation finale de l'appareillage électrique selon une orientation verticale (figure 2) conforme à la deuxième variante de réalisation de l'appareillage électrique.

Comme l'illustre la figure 13, selon une deuxième variante, le boîtier 2 peut comprendre un unique site 24a recevant un unique appareil électrique 3.

Dans toutes ces variantes, l'appareil électrique 3 peut être disposé à distance du fond 23 du boîtier 2 et le fond 23 et l'appareil électrique 3 délimitent un espace de câblage.

Cette configuration facilite le câblage du ou des appareils électriques 3.

## Revendications

1. Boîtier (2) d'appareillage électrique (1) comportant :
une embase (21) comprenant une paroi latérale (22) et un fond (23), ledit fond (23) étant bordé par ladite paroi latérale (22),
ladite embase (21) comprenant au moins un site (24a) ou un premier site (24a) apte et destiné à recevoir un seul appareil électrique (3),
ledit au moins un site (24a) ou un premier site (24a) comprenant au moins un ensemble ou un premier ensemble de moyens d'emboîtement (31) femelles qui s'étendent du fond (23) ou d'au moins une première partie (23a) du fond (23) pour recevoir des moyens d'emboîtement (32) mâles complémentaires de l'appareil électrique (3),
les moyens d'emboîtement (31) dudit au moins un site (24a) ou un premier site (24a) étant symétriques par rotation d'un angle égal à 90 degrés et/ou 180 degrés, selon un centre de symétrie (O1) ou un premier centre de symétrie (O1) respectivement du fond (23) ou de ladite au moins une première partie du fond (23a),
les moyens d'emboîtement comprenant au moins une rainure (31) saillante de ladite au moins une partie du fond (23a, 23b) ou du fond (23), s'étendant selon une direction sensiblement perpendiculaire au fond (23),
la rainure (31) comprenant une butée d'arrêt (310) disposée à une distance déterminée du fond (23),
le boîtier (2) est **caractérisé en ce que** ledit ensemble de moyens d'emboîtement comprend quatre de ces rainures (31) équidistantes dudit centre de symétrie (O1, O2 et symétriques par rotation d'un angle égal à 90 degrés par rapport au centre de symétrie du fond (23).

2. Boîtier selon la revendication 1, **caractérisé en ce que** ladite embase (21) comprend ledit premier site (24a) et au moins un deuxième site (24b), **en ce que** le premier site (24a) comprend le premier ensemble de moyens d'emboîtement (31) femelles, **en ce que** le deuxième site (24b) comprend un deuxième ensemble de moyens d'emboîtement (31) femelles, **en ce que** le fond (23) comprend ladite première partie de fond (23a) et une deuxième partie de fond (23b) comprenant un deuxième centre de symétrie (O2) et **en ce que** les moyens d'emboîtement (31) du premier site (24a) et du seconde site (24b) sont symétriques par rotation d'un angle égal à 90 degrés et/ou 180 degrés respectivement selon le premier centre de symétrie (O1) et le deuxième centre de symétrie (O2).

3. Boîtier selon la revendication 1, **caractérisé en ce que** ladite embase (21) comprend un unique site (24a), **en ce que** le site (24a) comprend un unique ensemble de moyens d'emboîtement (31) femelles, et **en ce que** le fond (23) comprend le centre de symétrie (O1).

4. Boîtier selon la revendication 1, **caractérisé en ce que** deux rainures (31) diamétralement opposées sont disposées en vis-à-vis et **en ce que** les moyens d'emboîtement (31) sont situés à distance de la paroi latérale (22).

5. Boîtier selon l'une quelconque des revendications 1 à 4, **caractérisé en ce que** la rainure (31) comprend des moyens de verrouillage (311) situés à distance de la butée d'arrêt (310).

6. Appareil électrique (3) apte et destiné à être disposé à l'intérieur dudit au moins un site (24a) ou premier site (24a, 24b) d'un boîtier (2) selon l'une quelconque des revendications 1 à 5, l'appareil électrique (3) comprenant des moyens d'emboîtement (32) mâles agencés pour coopérer par emboîtement avec lesdits moyens d'emboîtement (31) femelles correspondants de l'embase (21) et en ce que les moyens d'emboîtement (32) étant symétriques par rotation d'un angle égal à 90 degrés et/ou à 180 degrés selon un centre de symétrie (C1) dudit appareil électrique (3),
l'appareil électrique (3) est **caractérisé en ce qu'**au moins un des moyens d'emboîtement (32) mâles est déformable et comprend une partie d'appui (320) apte et destinée à désemboîter lesdits moyens d'emboîtement (32) mâles desdits moyens d'emboîtement (31) femelles de l'embase (21),
**en ce que** les moyens d'emboîtement (32) comprennent quatre languettes (321) saillantes de l'appareil électrique (3) aptes et destinées à être emboîtées dans les quatre rainures (31) correspondantes du boîtier (2) et les languettes (321) étant symétriques par rotation d'un angle égal à 90 degrés selon le centre de symétrie (C1),
**en ce qu'**il comprend deux languettes saillantes (321) diamétralement opposées parmi les quatre languettes saillantes (321) et **en ce que** les deux languettes saillantes (321) diamétralement opposées comprennent chacune ladite partie d'appui (320),
**en ce que** les deux languettes saillantes (321) diamétralement opposées comprenant chacune ladite partie d'appui (320) comprennent des moyens de verrouillage (322).

7. Appareillage électrique (1) **caractérisé en ce qu'**il comprend le boîtier (2) selon l'une quelconque des revendications 1 à 5 et au moins un appareil électrique (3) selon la revendication 6.

8. Appareillage électrique selon la revendication 7, **caractérisé en ce que** le boîtier (2) comprend un site (24a) ou au un moins premier site (24a) recevant chacun un unique appareil électrique (3) et **en ce que** l'appareil électrique (3) est fixé au site (24a) ou audit au moins un premier site (24a) par emboîtement des moyens d'emboîtement (31) du site (24a) ou dudit au moins premier site (24a) et des moyens d'emboîtement (32) de l'appareil électrique (3).

9. Appareillage électrique selon la revendication 8, **caractérisé en ce que** le boîtier (2) comprend un premier site (24a) et un deuxième site (24b) recevant chacun un unique appareil électrique (3).

10. Appareillage électrique selon la revendication 8, **caractérisé en ce que** le boîtier (2) comprend un unique site (24a) recevant un unique appareil électrique (3).

11. Appareillage électrique selon l'une quelconque des revendications 7 à 10, **caractérisé en ce que** l'appareil électrique (3) est disposé à distance du fond (23) du boîtier (2) et **en ce que** le fond (23) et l'appareil électrique (3) délimitent un espace de câblage.

## Patentansprüche

1. Gehäuse (2) für eine elektrische Ausrüstung (1), aufweisend:
eine Basis (21), die eine seitliche Wand (22) und einen Boden (23) umfasst, wobei der Boden (23) von der seitlichen Wand (22) begrenzt ist,
wobei die Basis (21) mindestens eine Stelle (24a) oder eine erste Stelle (24a) umfasst, die dazu in der Lage und bestimmt ist, ein einziges elektrisches Gerät (3) aufzunehmen,
wobei die mindestens eine Stelle (24a) oder eine erste Stelle (24a) mindestens eine Anordnung oder eine erste Anordnung von Aufnahmeandockmitteln (31) umfasst, die sich vom Boden (23) oder von mindestens einem ersten Teil (23a) des Bodens (23) erstrecken, um komplementäre Steckandockmittel (32) des elektrischen Geräts (3) aufzunehmen,
wobei die Andockmittel (31) der mindestens einen Stelle (24a) oder einer ersten Stelle (24a) rotationssymmetrisch mit einem Winkel von gleich 90 Grad und/oder 180 Grad gemäß einem Symmetriezentrum (O1) oder einem ersten Symmetriezentrum (O1) des Bodens (23) bzw. des mindestens einen ersten Teils (23a) des Bodens sind,
wobei die Andockmittel mindestens eine Rille (31) umfassen, die von dem mindestens einen Teil (23a, 23b) des Bodens oder von dem Boden (23) vorragt und sich in eine im Wesentlichen senkrecht zu dem Boden (23) verlaufende Richtung erstreckt,
wobei die Rille (31) einen harten Anschlag (310) umfasst, der in einem bestimmten Abstand von dem Boden (23) angeordnet ist,
wobei das Gehäuse (2) **dadurch gekennzeichnet ist, dass** die Andockmittelanordnung vier dieser Rillen (31) umfasst, die mit gleichem Abstand von dem Symmetriezentrum (O1, O2) angeordnet und rotationssymmetrisch mit einem Winkel von gleich 90 Grad gemäß dem Symmetriezentrum des Bodens (23) sind.

2. Gehäuse nach Anspruch 1, **dadurch gekennzeichnet, dass** die Basis (21) die erste Stelle (24a) und mindestens eine zweite Stelle (24b) umfasst, dass die erste Stelle (24a) die erste Anordnung von Aufnahmeandockmitteln (31) umfasst, dass die zweite Stelle (24b) eine zweite Anordnung von Aufnahmeandockmitteln (31) umfasst, dass der Boden (23) den ersten Bodenteil (23a) und einen zweiten Bodenteil (23b) umfasst, der ein zweites Symmetriezentrum (O2) umfasst, und dass die Andockmittel (31) der ersten Stelle (24a) und der zweiten Stelle (24b) rotationsymmetrisch mit einem Winkel von gleich 90 Grad und/oder 180 Grad gemäß dem ersten Symmetriezentrum (O1) bzw. dem zweiten Symmetriezentrum (O2) sind.

3. Gehäuse nach Anspruch 1, **dadurch gekennzeichnet, dass** die Basis (21) eine einzige Stelle (24a) umfasst, dass die Stelle (24a) eine einzige Anordnung von Aufnahmeandockmitteln (31) umfasst und dass der Boden (23) das Symmetriezentrum (O1) umfasst.

4. Gehäuse nach Anspruch 1, **dadurch gekennzeichnet, dass** zwei diametral gegenüberliegende Rillen (31) einander gegenüber angeordnet sind und dass die Andockmittel (31) mit Abstand von der seitlichen Wand (22) angeordnet sind.

5. Gehäuse nach einem der Ansprüche 1 bis 4, **dadurch gekennzeichnet, dass** die Rille (31) Verriegelungsmittel (311) umfasst, die mit Abstand von dem harten Anschlag (310) angeordnet sind.

6. Elektrisches Gerät (3), das dazu in der Lage und bestimmt ist, im Innern der mindestens einen Stelle (24a) oder der ersten Stelle (24a, 24b) eines Gehäuses (2) nach einem der Ansprüche 1 bis 5 angeordnet zu sein, wobei das elektrische Gerät (3) Steckandockmittel (32) umfasst, die dazu angeordnet sind, durch Andocken mit den entsprechenden Aufnahmeandockmitteln (31) der Basis (21) zusammenzuwirken, und die Andockmittel (32) rotationsymmetrisch mit einem Winkel von gleich 90 Grad und/oder 180 Grad gemäß einem Symmetriezentrum (C1) des elektrischen Geräts (3) sind,
wobei das elektrische Gerät (3) **dadurch gekennzeichnet ist, dass** mindestens eines der Steckandockmittel (32) deformierbar ist und einen Anlageteil (320) umfasst, der dazu in der Lage und bestimmt ist, die Steckandockmittel (32) aus den Aufnahmeandockmitteln (31) der Basis (21) freizugeben,
dass die Andockmittel (32) vier Zungen (321) umfassen, die aus dem elektrischen Gerät (3) vorragen und dazu in der Lage und bestimmt sind, in die entsprechenden vier Rillen (31) des Gehäuses (2) eingesteckt zu werden, wobei die Zungen (321) rotationsymmetrisch mit einem Winkel von gleich 90 Grad gemäß dem Symmetriezentrum (C1) sind,
dass es unter den vier vorragenden Zungen (321) zwei diametral gegenüberliegende vorragende Zungen (321) umfasst und dass die beiden diametral gegenüberliegenden vorragenden Zungen (321) jeweils den Anlageteil (320) umfassen,
dass die beiden diametral gegenüberliegenden vorragenden Zungen (321), die jeweils den Anlageteil (320) umfassen, Verriegelungsmittel (322) umfassen.

7. Elektrische Ausrüstung (1), **dadurch gekennzeichnet, dass** sie das Gehäuse (2) nach einem der Ansprüche 1 bis 5 und mindestens ein elektrisches Gerät (3) nach Anspruch 6 umfasst.

8. Elektrische Ausrüstung nach Anspruch 7, **dadurch gekennzeichnet, dass** das Gehäuse (2) eine Stelle (24a) oder mindestens eine erste Stelle (24a) umfasst, die jeweils ein einziges elektrisches Gerät (3) aufnimmt, und dass das elektrische Gerät (3) durch Andocken der Andockmittel (31) der Stelle (24a) oder der mindestens ersten Stelle (24a) und der Andockmittel (32) des elektrischen Geräts (3) an der Stelle (24a) oder an der mindestens einen ersten Stelle (24a) befestigt ist.

9. Elektrische Ausrüstung nach Anspruch 8, **dadurch gekennzeichnet, dass** das Gehäuse (2) eine erste Stelle (24a) und eine zweite Stelle (24b) umfasst, die jeweils ein einziges elektrisches Gerät (3) aufnehmen.

10. Elektrische Ausrüstung nach Anspruch 8, **dadurch gekennzeichnet, dass** das Gehäuse (2) eine einzige Stelle (24a) umfasst, die ein einziges elektrisches Gerät (3) aufnimmt.

11. Elektrische Ausrüstung nach einem der Ansprüche 7 bis 10, **dadurch gekennzeichnet, dass** das elektrische Gerät (3) mit Abstand von dem Boden (23) des Gehäuses (2) angeordnet ist und dass der Boden (23) und das elektrische Gerät (3) einen Kabelraum begrenzen.

## Claims

1. Housing (2) for electrical equipment (1) comprising:
a base (21) comprising a lateral wall (22) and a bottom (23), said bottom (23) being bordered by said lateral wall (22),
said base (21) comprising at least one location (24a) or one first location (24a) designed and intended to receive a single electrical device (3),
said at least one location (24a) or one first location (24a) comprising at least one set or one first set of female fitting means (31) which extend from the bottom (23) or from at least a first part (23a) of the bottom (23) to receive complementary male fitting means (32) of the electrical device (3),
the fitting means (31) of said at least one location (24a) or a first location (24a) being symmetrical by rotation by an angle equal to 90 degrees and/or 180 degrees, according to a centre of symmetry (01) or a first centre of symmetry (01) respectively of the bottom (23) or of said at least one first part of the bottom (23a),
the fitting means comprising at least one groove (31) protruding from said at least one part of the bottom (23a, 23b) or from the bottom (23), extending in a direction substantially at right angles to the bottom (23),
the groove (31) comprising a stop (310) disposed at a determined distance from the bottom (23),
the housing (2) is **characterized in that** said set of fitting means comprises four of these grooves (31) equidistant from said centre of symmetry (O1, O2) and symmetrical by rotation by an angle equal to 90 degrees with respect to the centre of symmetry of the bottom (23).

2. Housing according to Claim 1, **characterized in that** said base (21) comprises said first location (24a) and at least one second location (24b), **in that** the first location (24a) comprises the first set of female fitting means (31), **in that** the second location (24b) comprises a second set of female fitting means (31), **in that** the bottom (23) comprises said first bottom part (23a) and a second bottom part (23b) comprising a second centre of symmetry (O2) and **in that** the fitting means (31) of the first location (24a) and of the second location (24b) are symmetrical by rotation by an angle equal to 90 degrees and/or 180 degrees respectively according to the first centre of symmetry (O1) and the second centre of symmetry (O2).

3. Housing according to Claim 1, **characterized in that** said base (21) comprises a single location (24a), **in that** the location (24a) comprises a single set of female fitting means (31), and **in that** the bottom (23) comprises the centre of symmetry (O1).

4. Housing according to Claim 1, **characterized in that** two diametrically opposite grooves (31) are disposed facing one another and **in that** the fitting means (31) are situated at a distance from the lateral wall (22).

5. Housing according to any one of Claims 1 to 4, **characterized in that** the groove (31) comprises locking means (311) situated at a distance from the stop (310).

6. Electrical device (3) designed and intended to be disposed inside said at least one location (24a) or first location (24a, 24b) of a housing (2) according to any one of Claims 1 to 5, the electrical device (3) comprising male fitting means (32) arranged to cooperate by fitting together with said corresponding female fitting means (31) of the base (21) and the fitting means (32) being symmetrical by rotation by an angle equal to 90 degrees and/or 180 degrees according to a centre of symmetry (C1) of said electrical device (3),
the electrical device (3) is **characterized in that** at least one of the male fitting means (32) is deformable and comprises a bearing part (320) designed and intended to release said male fitting means (32) from said female fitting means (31) of the base (21),
**in that** the fitting means (32) comprise four tongues (321) protruding from the electrical device (3) designed and intended to be fitted into the four corresponding grooves (31) of the housing (2) and the tongues (321) being symmetrical by rotation by an angle equal to 90 degrees according to the centre of symmetry (C1),
**in that** it comprises two protruding tongues (321) that are diametrically opposite from among the four protruding tongues (321) and **in that** the two diametrically opposite protruding tongues (321) each comprise said bearing part (320),
**in that** the two diametrically opposite protruding tongues (321) each comprising said bearing part (320) comprise locking means (322).

7. Electrical equipment (1), **characterized in that** it comprises the housing (2) according to any one of Claims 1 to 5 and at least one electrical device (3) according to Claim 6.

8. Electrical equipment according to Claim 7, **characterized in that** the housing (2) comprises a location (24a) or at least one first location (24a) each receiving a single electrical device (3) and **in that** the electrical device (3) is fixed to the location (24a) or to said at least one first location (24a) by fitting together of the fitting means (31) of the location (24a) or of said at least one first location (24a) and of the fitting means (32) of the electrical device (3).

9. Electrical equipment according to Claim 8, **characterized in that** the housing (2) comprises a first location (24a) and a second location (24b) each receiving a single electrical device (3).

10. Electrical equipment according to Claim 8, **characterized in that** the housing (2) comprises a single location (24a) receiving a single electrical device (3).

11. Electrical equipment according to any one of Claims 7 to 10, **characterized in that** the electrical device (3) is disposed at a distance from the bottom (23) of the housing (2) and **in that** the bottom (23) and the electrical device (3) delimit a wiring space.
